**Europäisches Patentamt**

**European Patent Office**

**Office européen des brevets**

(11) Veröffentlichungsnummer: **0 052 207**
A2

(12) # EUROPÄISCHE PATENTANMELDUNG

(21) Anmeldenummer: **81107831.0**

(22) Anmeldetag: **02.10.81**

(51) Int. Cl.³: **B 29 D 3/02**
**B 29 C 27/00**

(30) Priorität: **13.11.80 DE 3042771**

(43) Veröffentlichungstag der Anmeldung:
**26.05.82 Patentblatt 82/21**

(84) Benannte Vertragsstaaten:
**AT FR GB SE**

(71) Anmelder: **Held, Kurt**
**Alte Strasse 1**
**D-7218 Trossingen 2(DE)**

(72) Erfinder: **Held, Kurt**
**Alte Strasse 1**
**D-7218 Trossingen 2(DE)**

(74) Vertreter: **Ullrich, Thurmod, Dr.**
**c/o Held Alte Strasse 1**
**D-7218 Trossingen 2(DE)**

(54) **Kunststoff-Metall-Verbundwerkstoff und Verfahren zu seiner Herstellung.**

(57) Die Erfindung betrifft einen Kunststoff-Metall-Verbundwerkstoff in Form grossflächiger Duro- oder Thermoplastprofile und diese ganz oder teilweise bedeckenden Metallfolien, -blechen oder -geweben und von Stossverbindungen zwischen Thermoplastprofilen in Längsrichtung und Querrichtung bei dem die Verbundseite der Metallfolien, -bleche oder -gewebe (1, 2) mit aufgeschweissten Metalldrähten, -drahtgeweben, -kugeln oder ähnlichen für einen sie umschliessenden Kunststoff (4) Hinterschneidungen darstellenden Gebilden (3) versehen ist, in die der Werkstoff des Grundkörpers in flüssiger oder teigiger Phase eingeflossen ist und sie in erstarrtem Zustand umschliesst. Nach dem erfindungsgemässen Verfahren werden auf die mit der zu verbindenden Kunststoffoberfläche zugewandten Metallfläche Metalldrähte, -drahtgewebe, -kugeln oder ähnliche für den eindringenden Kunststoff Hinterschneidungen darstellende Gebilde aufgeschweisst, die zu verbindende Fläche des Kunststoffgrundkörpers durch Erwärmen in eine schmelzflüssige oder teigige Phase übergeführt und die aufgeschmolzene Fläche zur Einbettung unter Druck senkrecht auf die aufnehmende Metalloberfläche geführt und erstarren oder erkalten gelassen.

Fig. 1

Kunststoff-Metall-Verbundwerkstoff und Verfahren zu seiner Herstellung.

Die Erfindung betrifft einen Kunststoff-Metall-Verbundwerkstoff und ein Verfahren zu seiner Herstellung. Es handelt sich dabei vorzugsweise um flächige oder profilförmige Kunststoff-Metall-Verbundwerkstoffe, insbesondere für Fenster- und andere Bauprofile, sowie für Fassaden-, Dach- und Wandprofile oder dergleichen.

Es ist bekannt, beispielsweise Fensterprofile aus Polyvinylchlorid durch Koextrusion mit einem an der Rückseite mit wärmeaktivierbarem Kleber versehenen Aluminiumband zu verbinden. Ferner sind Wand- und Dachbauelemente bekannt, bei denen zwischen zwei die Deckflächen bildenden glatten oder trapezförmig profilierten Blechen Polyurethanschaum die Verbindungs- und Füllkörperfunktion übernimmt. Weiter ist es allgemein gebräuchlich Metallteile mit Kunststoffen dadurch zu verbinden, daß diese eine sogenannte Hinterschneidungen bildende Form erhalten, die in den Kunststoff eingebettet werden und mit diesem eine unlösbare Verbindung eingehen.

So ist beispielsweise aus der DE-OS 15 54 943 ein Verfahren zum Verbinden einer Schicht aus einem hochmolekularen Polyamid-Polymerisat mit einer Metallschicht bekannt, bei dem die beiden Schichten unter Reduktion beider Schichten zusammengedrückt werden, das dadurch gekennzeichnet ist, daß die Polymerschicht vor dem Zusammendrücken gebacken wird, daß das Zusammendrücken mit einer Reduktion zur Schaffung eines grünen Verbundes geschieht und daß anschließend der grüne Verbund durch Sintern verbessert wird.

Die DE-PS 19 48 527 beschreibt eine als Fußbodenbelag in Form von Bahnen oder Fliesen dienende Auslegeware, bestehend aus einer oder mehreren, bei verlegtem Belag nach oben orientierten Haar- oder Faserstoffschichten und einem mit der Rückseite der unteren Schicht verbundenen Rücken, der gegebenenfalls auf seiner Außenseite profiliert ist und der aus einer Mischung aus wenigstens 27 Gewichtsprozent eines mit einem kleinen Anteil an Bitumen vermischten Kunststoffes aus Polyäthylen-Acrylsäureester-Copolymerisat und wenigstens 55 bis 60 Gewichtsprozent Kohlenstaub mit einer Körnung von 0 bis 30 µ und einem Anteil an unbrennbaren Bestandteilen von bis zu 30 Gewichtsprozent besteht, der dadurch gekennzeichnet ist, daß der Rücken auf seiner Außenseite eine Schicht aus Kunststoffschaum trägt.

Schließlich ist aus den Unterlagen des DE-GM 7 227 136 eine bahnförmige metallische Abdeckfolie für Isolierungen, vorzugsweise aus Aluminium, bekannt, die dadurch gekennzeichnet ist, daß sie eine zusätzliche dünne elastische Trägerschicht aus Kunststoff besitzt, die an der der Metallfolie zugewandten Seite teilweise angeschmolzen ist, wobei diese angeschmolzene Zwischenschicht als Kleber dient.

Die Verbindung von Metall mit Kunststoff durch Kleben hat den Nachteil, daß nur gut gereinigte, möglichst oberflächenvergrößernd vorbehandelte Metallflächen mit sorgfältig ausgewählten und angewendeten Klebern zu Verbundwerkstoffen mit langfristig gleichbleibenden Güteeigenschaften verarbeitet werden können. Fehlerhafte Verklebungen können außer durch eine zerstörende Prüfung nicht festgestellt werden, eine Einzelstückprüfung ist fast immer ausgeschlossen.

Sollen solche Verbindungen gar jahrzehntelang, beispielsweise als Hochbau-Werkstoffe der Bewitterung ausgesetzt werden, so ist die Gefahr von unentdeckten Verbindungsmängeln so groß, daß sich großflächige Verklebungen mit Metalloberflächen an Hochbauelementen nur sehr zögernd einführen.

Die Verbindung von Metallteilen mit Kunststoffen schließlich beschränkt sich auf die Einbettung von Hinterschneidungen aufweisender Gewindebüchsen und -bolzen und ähnliches in Spritz- und Pressteile. Bei großflächigen Verbindungen besteht die Befürchtung, die sehr unterschiedlichen Wärmedehnungsbeiwerte von Metallen und Kunststoffen werden zu unzulässigen thermischen Verformungen führen. Diese Befürchtung erweist sich jedoch in allen den Fällen als unbegründet, in denen der Kunststoffquerschnitt ein hohes Vielfaches des Metallquerschnitts beträgt, thermische Spannungen also zur Dehnung des Metallquerschnitts führen.

Der Erfindung liegt die Aufgabe zugrunde einen Kunststoff-Metall-Verbundwerkstoff zu schaffen, der eine dauerfeste Verbindung von Metalloberflächen mit Kunststoffen verschiedener Art erlaubt, bei dem von der Art her Zweifel an der möglichen Festigkeit und Dauerhaftigkeit ausgeschlossen sind und der möglichst durch einfachen Augenschein einzelstückweise geprüft werden kann.

Die Lösung dieser Aufgabe wird durch die technische Lehre vermittelt, daß die Verbundseite der Metallfolien, -bleche oder -gewebe mit aufgeschweißten Metalldrähten, -drahtgeweben, -kugeln oder ähnlichen für einen sie umschließenden Kunststoff Hinterschneidungen darstellenden Gebilden versehen ist, in die der Werkstoff des Grundkörpers in flüssiger oder teigiger Phase eingeflossen ist und sie in erstarrtem Zustand umschließt.

Das Verfahren zur Herstellung des Kunststoff-Metall-Verbundwerkstoffes ist dadurch gekennzeichnet, daß man auf die mit der zu verbindenden Kunststoffoberfläche zugewandte Metalloberfläche Metalldrähte, -drahtgewebe, -kugeln oder ähnliche für den eindringenden Kunststoff Hinterschneidungen darstellende Gebilde aufschweißt, die zu verbindende Fläche des Kunststoffgrundkörpers durch Erwärmen in eine schmelzflüssige oder teigige Phase überführt und die aufgeschmolzene Fläche zur Einbettung unter Druck senkrecht auf die aufnehmende Metalloberfläche führt und erstarren oder erkalten läßt.

Für die Lösung der Aufgabe ist es auch möglich, zum Beispiel bei Thermoplasten, die mit dem Kunststoffkörper zu verbindende Folie so aufzuwärmen, daß die Kunststoffoberfläche aufschmilzt, wenn die erwärmte Folie auf sie aufgedrückt wird. Wird die Erwärmung der Folie so begrenzt, daß die darin gespeicherte Wärme lediglich für das Aufschmelzen der den Hinterschneidungen bildenden Metallgebilden eng benachbarten Bereiche des Kunststoffkörpers ausreicht, dann gelingen besonders schnelle Verbindungen innerhalb weniger Sekunden.

Die gemäß der Erfindung erzielten Vorteile bestehen darin, daß statt verfahrensmäßig schwierig zu sichernder Klebebedingungen zwei einfach und mit bewährten Technologien durchführbare Schmelzschweißprozesse oder, bei chemisch härtenden Kunststoffen, eine Kombination von Schmelzschweiß- und nachfolgendem Gieß- oder Pressformprozeß Anwendung findet. Sie erlauben die Verbindung der Hinterschneidungsgebilde mit der Rückseite der Metallfolie oder des Blechs durch Rollnaht-, Punkt- oder Buckelschweißen oder durch Sintern und die Verbindung dieser erfindungsgemäß vorbereiteten Oberfläche mit der Kunststoffoberfläche durch Koextrusion, Aufschmelzen der Kunststoffoberflächen und Eindrücken der kalten oder warmen Hinterschneidungsfläche oder durch Einpressen oder Aufgießen.

Die erfindungsgemäße Verbindung kann an jeder Schnittstelle des Profils oder der Platte optisch und damit zerstörungsfrei darauf geprüft werden, ob die gegenseitige Hinterschneidung zwischen Metall- und Kunststoffoberfläche wie beabsichtigt zustande gekommen ist. Die Verbindungsfestigkeit entsprechend den konstruktiv vorgesehenen Hinterschneidungsquerschnitten ist berechen- und einfach reproduzierbar.

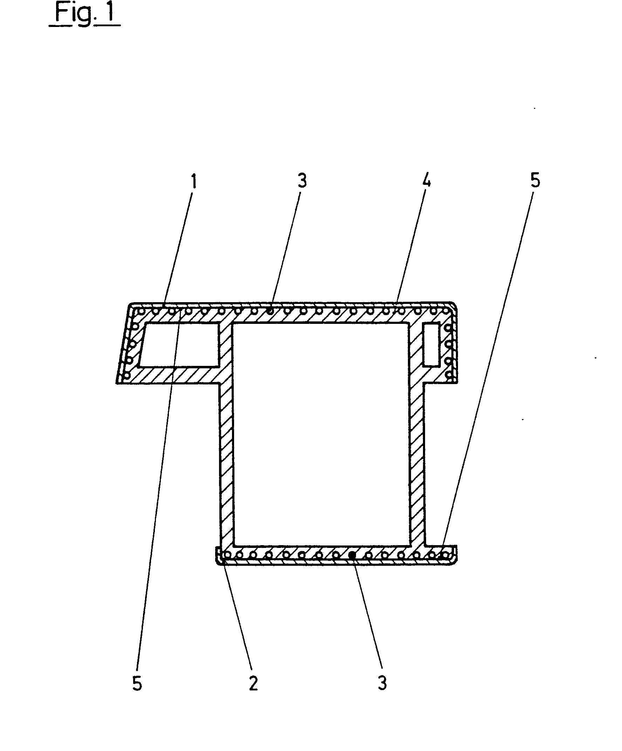

Ausführungsbeispiele der Erfindung zeigen die Figuren 1 bis 3. Fig. 1 zeigt einen Schnitt durch ein Thermoplastprofil mit Metalloberflächen, wie es für Fensterrahmen Verwendung finden könnte. Die Metallfolien 1 und 2 weisen an ihrer dem Kunststoffkern 4 des Profils zugewandten Rückseite 5 durch Rollnahtschweißen verbundene längsgewellte Drähte 3 auf, die von der Kunststoffschmelze beim Extrusionsvorgang voll umflossen und so unlösbar eingebettet wurden. Foliendicke, Drahtdruchmesser, Wellungshöhe und Länge, sowie Schweißquerschnitt werden entsprechend den Gebrauchsanforderungen bemessen.

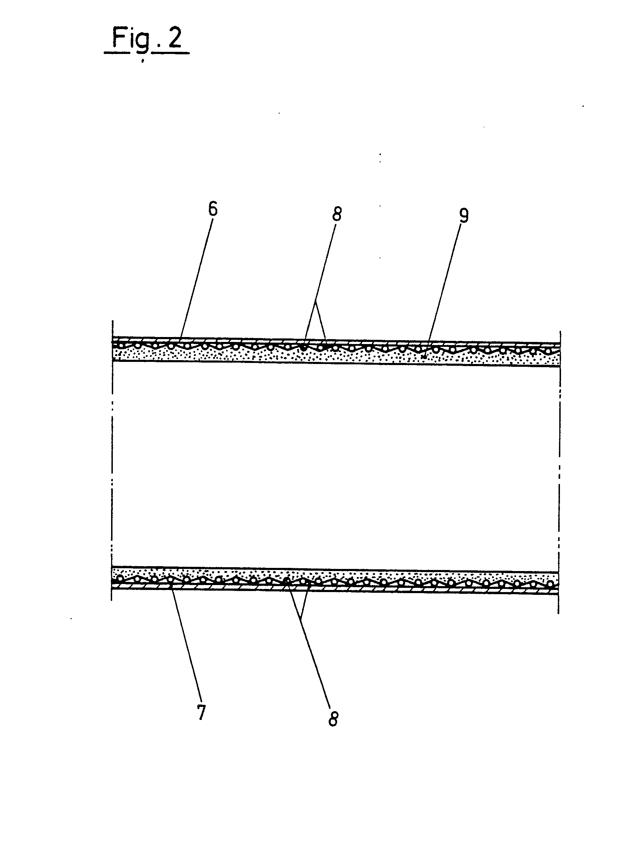

Fig. 2 zeigt einen Querschnitt durch ein plattenförmiges, glasfaserarmiertes Duroplastprofil, wie es als Fassaden- oder Dachelement eingesetzt werden kann. Die Folien 6 und 7 weisen ein durch Rollnahtschweißen befestigtes Drahtgewebe 8 auf, das in die mit geeigneten Tränkharzen imprägnierten Glasfaserrovings 9, das sind aus Glasfäden bestehende Stränge ohne eine wesentliche Drehung, beim Verpressen eingedrückt und von den ausgehärteten Tränkharzen und teilweise von den Glasfasern 9 umschlossen ist.

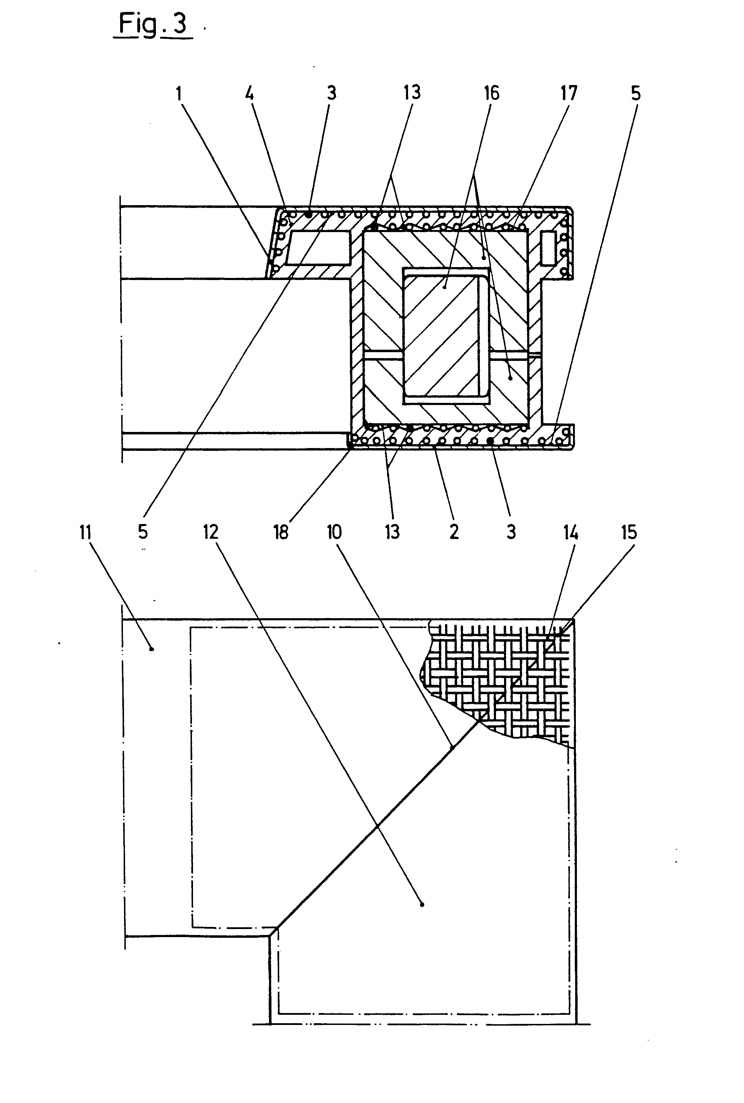

Fig. 3 zeigt einen Querschnitt durch ein Thermoplastprofil nach Fig. 1, bei dem das erfindungsgemäße Verfahren angewendet ist zur Verbindung zweier Profilabschnitte, zum Beispiel an den Ecken zu einem Fensterrahmen. Wie in Fig. 1 zeigt der Kunststoffkern 4 des Profils Metallfolien 1 und 2, deren Rückseiten 5 längsgewellte Drähte 3 aufweisen, die im Profilkern 4 eingebettet sind. Die Stoßfuge 10 zwischen den beiden Profilstücken 11 und 12 ist überdeckt von einem grobmaschigen Gewebe 13 dicker, an den Kreuzpunkten von Schuß 14 und Kette 15 verschweißter Drähte, das, in einem elektromagnetischen Wechselfeld erwärmt, von Spreizvorrichtungen 16 in die Profilinnenwände 17 und 18 eingeschmolzen wurde.

PATENTANSPRÜCHE

1.   Kunststoff-Metall-Verbundwerkstoff in Form großflächiger Duro- oder Thermoplastprofile und diese ganz oder teilweise bedeckenden Metallfolien, -blechen oder -geweben und von Stoßverbindungen zwischen Thermoplastprofilen in Längsrichtung und Querrichtung, d a d u r c h   g e k e n n - z e i c h n e t, daß die Verbundseite der Metallfolien, -bleche oder -gewebe mit aufgeschweißten Metalldrähten, -drahtgeweben, -kugeln oder ähnlichen für einen sie umschließenden Kunststoff Hinterschneidungen darstellenden Gebilden versehen ist, in die der Werkstoff des Grundkörpers in flüssiger oder teigiger Phase eingeflossen ist und sie in erstarrtem Zustand umschließt.

2.   Verfahren zur Herstellung des Erzeugnisses nach Anspruch 1,   d a - d u r c h   g e k e n n z e i c h n e t, daß man auf die mit der zu verbindenden Kunststoffoberfläche zugewandte Metalloberfläche Metalldrähte, -drahtgewebe, -kugeln oder ähnliche für den eindringenden Kunststoff Hinterschneidungen darstellende Gebilde aufschweißt, die zu verbindende Fläche des Kunststoffgrundkörpers durch Erwärmen in eine schmelzflüssige oder teigige Phase überführt und die aufgeschmolzene Fläche zur Einbettung unter Druck senkrecht auf die aufnehmende Metalloberfläche führt und erstarren oder erkalten läßt.

## Fig. 1

0052207

## Fig. 2

0052207

## Fig.3